# EUROPEAN PATENT SPECIFICATION

(11) **EP 2 563 062 B1**
(45) Date of publication and mention of the grant of the patent: **13.12.2017**
(21) Application number: 11819284.8
(22) Date of filing: 25.01.2011
(51) Int. Cl.: H04W 76/02, H04L 29/08, H04L 29/06

(54) **LONG CONNECTION MANAGEMENT APPARATUS AND LINK RESOURCE MANAGEMENT METHOD FOR LONG CONNECTION COMMUNICATION**
VORRICHTUNG ZUR VERWALTUNG EINER LANGEN VERBINDUNG UND VERKNÜPFUNGSRESSOURCEN-VERWALTUNGSVERFAHREN FÜR EINE KOMMUNIKATION MIT EINER LANGEN VERBINDUNG
APPAREIL DE GESTION DE CONNEXIONS LONGUES ET PROCÉDÉ DE GESTION DE RESSOURCES DE LIAISON POUR LA COMMUNICATION À CONNEXIONS LONGUES

(30) Priority: 27.08.2010 CN 201010269308
(43) Date of publication of application: 27.02.2013
(73) Proprietor: ZTE Corporation, Shenzhen, Guangdong 518057 (CN)
(72) Inventor: SUN, Yichao, Guangdong 518057 (CN); LU, Qinyuan, Guangdong 518057 (CN)
(74) Representative: Gervasi, Gemma
(86) International application number: PCT/CN2011/070601
(87) International publication number: WO 2012/024909

(56) References cited:
- CN-A- 1 866 933
- CN-A- 101 232 410
- CN-C- 100 440 872
- US-A1- 2004 205 208
- US-A1- 2005 044 270
- US-B1- 7 490 162

## Description

### Technical Field

The present invention relates to the technical field of link resource management in wireless communication systems, and more especially, to a long connection management apparatus and a link resource management method for long connection communication.

### Background of the Related Art

With the continuous development of the Wireless Application Protocol (WAP) service and the rapid growth of the number of users, in the peak hours of the WAP service, the WAP gateway server often needs to establish or close thousands of connections in the unit time. Since often tens of thousands of links should be authenticated and verified per minute, the firewall consumes a lot of CPU, and the verification efficiency of link establishment request will be significantly reduced, which leads to each hypertext transfer protocol (HTTP) communication within this time period having one or a few seconds delay in the link establishment process, reducing the communication efficiency.

Through the statistical analysis of the firewall log, it can be found that, the user group accesses some well-known and large-scale portals and entertainment WAP websites frequently per unit time, followed by the access of some moderately popular WAP sites, and some WAP sites are accessed occasionally, that is, the amount of access of each WAP site varies in the same time period. After the Transmission Control Protocol (TCP) short connection is used to establish a connection with the WAP site, the link will be disconnected after one HTTP request and response, thus the utilization efficiency of link is not high, and in the peak hours of the WAP service, the efficiency problem caused by the frequent link establishment/disconnection is prominent.

In order to solve the efficiency problem of this TCP short connection due to the frequent link establishment / disconnection, the HTTP communication method for establishing a TCP long connection between the WAP gateway and the WAP site can be used to replace the short connection communication. The so-called long connection is, on a connection already established with a certain WAP site, continuing to send HTTP requests for accessing this site and receive HTTP responses returned by the WAP site, which can achieve the long connection multiplexing, and this method for multiplexing the links is one of most reasonable solutions for avoiding the frequent link establishment / disconnection.

Achieving the HTTP long connection communication must have a perfect link resource management mechanism. In short, when a WAP gateway receives a HTTP request for accessing a certain WAP site, it must know which links are connected to the WAP site, among these connections, which connections are idle and can carry the HTTP request and which connections are busy and are used by other users. At the same time, in order to achieve the HTTP long connection communication, the convergence of the number of links must be maintained.

The document US7490162B1 discloses a method for forwarding messages received at a traffic manager.

### Summary of the Invention

The technical problem to be solved in the present invention is to provide a long connection management apparatus and a link resource management method for long connection communication to solve the problem of long connection resource management when the existing WAP site establishes a HTTP communication with the WAP website.

In order to solve the aforementioned problem, the present invention provides a method according to claim 1 and an apparatus according to claim 7. Further improvements and embodiments are provided in the dependent claims.

Also provided is a link resource management method for long connection communication, comprising:
according to a history record of HTTP communication, taking a [Domain Name / IP address: port] as a keyword to establish a corresponding connection pool, configuring the number of idle long connections and busy long connections in the connection pool according to frequency of accessing the WAP website identified by the [Domain Name / IP address: port];
when it needs to establish a link between the WAP gateway and the WAP website, searching for the corresponding connection pool according to the [domain name / IP address: port] of an access request, if the corresponding connection pool is searched out, allocating an idle long connection to the access request in the connection pool, and informing a HTTP module to establish a link by using the allocated idle long connection so as to perform a HTTP communication with the WAP website identified by the [Domain Name/IP address: port].

Said method further comprises: if the corresponding connection pool is not searched out according to the [domain name/IP address: port] of the access request, establishing a new corresponding connection pool by taking the [domain name / IP address: port] as the keyword, and establishing a new idle long connection in the connection pool and allocating the new idle long connection to the access request for link establishment.

Said method further comprises: all connection pools using one HASH table in a single thread to characterize a capacity of the connection pool, using a least recently used algorithm (LRU) in the HASH table to arrange the connection pools in the single thread into a link list, at each time when there is a HTTP access request, an accessed connection pool which is searched out according to the [Domain Name / IP address: port] is set at the head of connection pool link list.

Said method further comprises: regularly releasing the connection pools that do not carry any HTTP messages within a certain time period in the connection pool link list, and traversing from end to head of the connection pool link list according to a release time limit, and releasing the connection pools that exceed the release time limit and do not carry any HTTP messages.

Said method further comprises: using the HASH table in one connection pool to characterize the number of long connections in the connection pool, and regularly recording the number of busy links in the connection pool and calculating a statistical average value to obtain the number of long connections.

Said connection pool comprises: an idle long connection link list and a busy long connection link list, and said method further comprises:
at each time when a link is required to be established for the WAP website, which is identified by the [domain name/IP address: port], corresponding to the connection pool, allocating an idle long connection at the head of the idle long connection link list to provide a link establishment service, and adding the allocated long connection for link establishment into the end of the busy long connection link list;
   when one busy long connection fulfills an access to the WAP website corresponding to the connection pool, extracting that long connection from the busy long connection link list and adding it to the end of the idle long connection link list;
when the idle long connection link list is empty, establishing a new idle long connection for the connection pool.

Also provided is a long connection management apparatus, and the long connection management apparatus is connected between a WAP gateway and a HTTP module, comprising: a resource management module and one or more connection pools,
each connection pool corresponds to one WAP website identified by [Domain Name / IP address: port]; said each connection pool comprises one or more long connections, wherein, idle long connections constitute an idle long connection link list, and busy long connections constitute a busy long connection link list;
said resource management module is configured to: when receiving a HTTP access request, search for a corresponding connection pool according to the [domain name / IP address: port] of the access request, if the corresponding connection pool is searched out, allocate an idle long connection in the connection pool to the access request, and inform the HTTP module of the allocated long connection.

Said resource management module is further configured to: use a HASH table to characterize a capacity of the connection pool in a single thread, and use a least recently used algorithm (LRU) in the HASH table to arrange the connection pools in the single thread into a link list, and at each time when there is a HTTP access request, place an accessed connection pool which is searched out according to the [Domain Name / IP address: port] at the head of connection pool link list.

Said resource management module is further configured to: regularly release connection pools that do not carry any HTTP messages within a certain time period, traverse from end to head of the connection pool link list according to a release time limit, and release the connection pools that exceed the release time limit and do not carry any HTTP messages.

Said connection pool uses the HASH table to characterize the number of long connections in the connection pool, and regularly records the number of busy links in the connection pool and calculates a statistical average value to obtain the number of long connections.

Said connection pool comprises: an idle long connection link list and a busy long connection link list,
said resource management module is further configured to: at each time when a link is required to be established for the WAP website, which is identified by the [Domain Name/IP address: port], corresponding to the connection pool, allocate an idle long connection at the head of the idle long connection link list to provide a link establishment service, and add the allocated long connection for link establishment into the end of the busy long connection link list;
after one busy long connection completes an access to the WAP website corresponding to the connection pool, extract that long connection from the busy long connection link list and add it to the end of the idle long connection link list;
when the idle long connection link list is empty, establish a new idle long connection for the connection pool.

The technical solution of the present invention solves the problems of link establishment delay and resource waste due to the frequent link establishment in the HTTP short connection communication, achieves the TCP long connection communication and adjusts the number of long connections in real time: at the same time when the normal HTTP message communication is guaranteed, the number of connections established and closed per unit time can be reduced, thereby reducing the pressure on the firewall, so that the HTTP communication efficiency in the direction of link establishment from the WAP gateway to the WAP website is significantly increased. Through the test, it can be found that more frequently accessing a website with a certain domain name, the multiplexing effect would be better, and the quasi-WAP site test constructed by the WAP bill indicates that the multiplexing efficiency can reach about 90%.

### Brief Description of Drawings

FIG. 1 is a schematic diagram of the HTTP supporting the long connection communication;
FIG. 2 is a structure diagram of the connection pool corresponding to a single thread in the HTTP long connection communication;
FIG. 3 is an overall flow chart of the HTTP long connection communication;
FIG. 4 is a flow chart of processing when receiving a request message in the HTTP long connection communication;
FIG. 5 is a flow chart of processing when receiving a response message in the HTTP long connection communication.

### Preferred Embodiments of the Present Invention

In order to make the purpose, the technical solution and the advantages of the present invention clearer, the present invention will be described in further detail in the following with combination of the accompanying drawings.

The present invention provides a long connection management apparatus and a link resource management method for long connection communication according to the problem of the link resource management that needs to be considered when using the long connection to perform the HTTP communication and when the WAP gateway accesses the WAP site. Take the [domain name / IP address: port number] as a keyword to classify multiple long connections that access the same domain name as one connection pool, and respectively identify the idle long connection link list and the busy long connection link list in the connection pool; according to the busy condition of the service, dynamically adjust the number of the connection pools and their orders, in each connection pool, dynamically adjust the orders of the link lists which the busy and idle long connections belong to, as well as the number of long connections in the link list.

In the case of guaranteeing that the WAP communication is normal, the present invention improves the link multiplexing rate through the reasonable long connection resource management and adjusts the number of long connections accessing the domain name of each WAP website in real time, which can ensure the accuracy of the long connection access and the utilization efficiency of link resource. If the WAP gateway service is idle, it would be ok as long as a small number of long connections are sustained in each connection pool, on the contrary, during the busy period, the connection pool needs to sustain relatively large number of long connections, and when the WAP service gradually changes from busy to idle, monitoring in real time how busy each accessed domain name is to adjust the number of connection pools as well as the number of long connections in the connection pool can avoid resource waste due to the extra long connections.

The present invention is the intermediary application of the application layer and the transport layer in the TCP/IP network model, and its main purpose is for HTTP communication optimization, and it is applicable to the service nodes whose HTTP communication is frequent, and the number of threads can be determined according to how busy the service is.

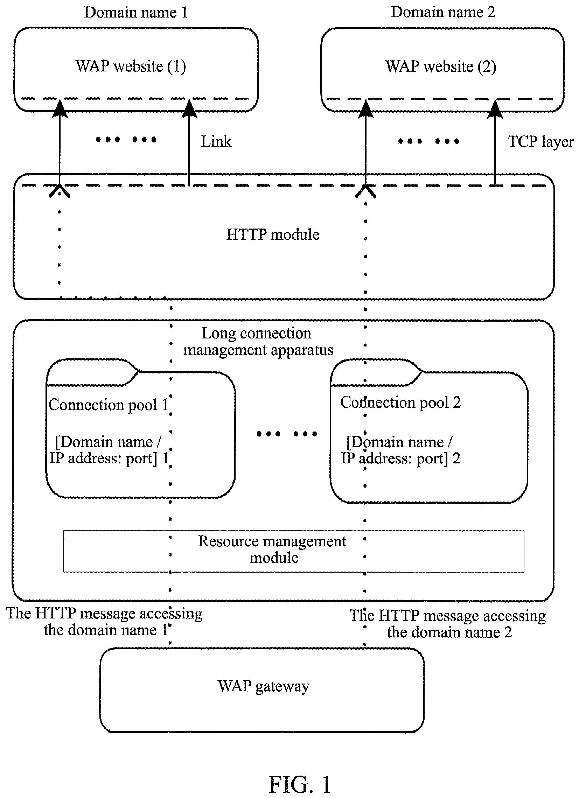

As shown in FIG. 1, which is a structure diagram of the long connection management apparatus, and the long connection management apparatus is added between the WAP gateway and the WAP site and it is used to receive HTTP access requests from the WAP gateway, allocate the connection pool as well as the available idle long connections in the connection pool according to the access request and indicate the HTTP module to use the allocated long connection to access the WAP site. Said long connection management apparatus comprises: a resource management module as well as one or more connection pools, and said each connection pool corresponds to one WAP website identified by the [Domain Name/IP address: port]; each connection pool comprises one or more long connections, wherein, the idle long connections constitute an idle long connection link list, and the busy long connections constitute a busy long connection link list;
the resource management module of said long connection management apparatus is used to search for the corresponding connection pool according to the [domain name/IP address: port] of the access request when the WAP gateway receives the HTTP access request, and if the corresponding connection pool is searched out, allocate an idle long connection in the connection pool to the access request;
said HTTP module is used to use the idle long connection allocated by the long connection management apparatus to establish a link for the access request between the WAP gateway and the WAP website identified by the [Domain Name/IP address: port] so as to perform the HTTP communication.

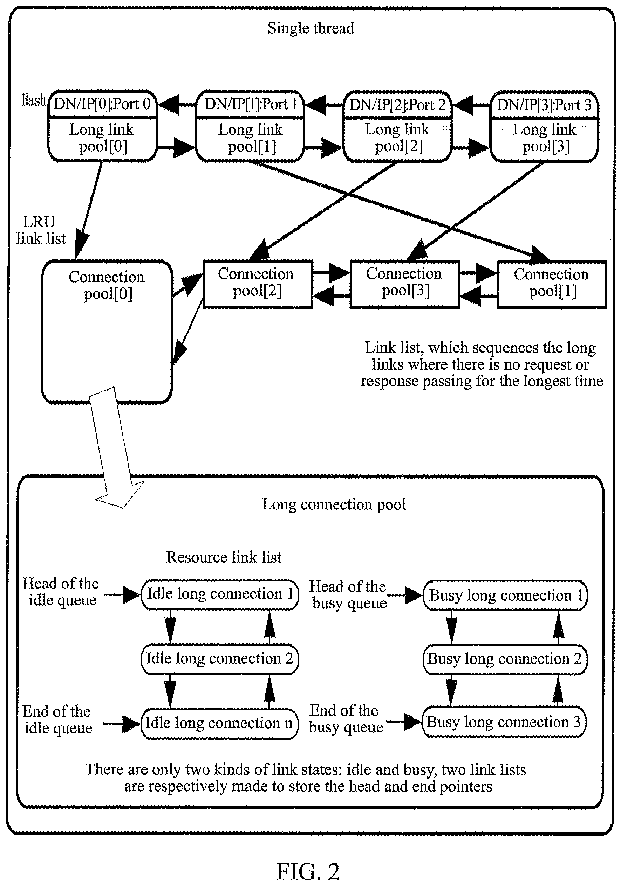

As shown in FIG. 2, the resource management module of the long connection management module is used to use one HASH table to characterize the capacity of the connection pool in a single thread, and use the least recently used algorithm LRU in the HASH table to arrange the connection pools in the single thread into one LRU link list, and at each time when there is a HTTP access request, place the accessed connection pool which is searched out according to the [Domain Name/IP address: port] at the head of the connection pool link list.

The resource management module of said long connection management apparatus is also used to regularly release the connection pools that do not carry any HTTP messages within a certain time period, traverse from the end to head of the connection pool link list according to the release time limit, and release the connection pools that exceed the release time limit and do not carry any HTTP messages.

The resource management module of the long connection management apparatus uses the HASH table in one connection pool to characterize the number of long connections in the connection pool, and it regularly records the number of busy links in the connection pool and calculates a statistical average value to obtain the number of long connections.
said connection pool comprises: an idle long connection link list and a busy long connection link list, wherein:
said resource management module of the long connection management apparatus, at each time when it needs to establish a link for the WAP website, which is identified by the [Domain Name/IP address: port], corresponding to the connection pool, allocates an idle long connection at the head of the idle long connection link list to the WAP website to provide the link establishment service, and adds the allocated long connection for link establishment into the end of the busy connection link list; the resource management module of the long connection management apparatus, after one busy long connection completes the access to the WAP website corresponding to the connection pool and carries the message returned by the WAP website to complete one task, extracts that long connection from the busy long connection link list and adds it to the end of the idle long connection link list; the resource management module of the long connection management apparatus, when the idle long connection link list is empty, establishes a new idle long connection for the connection pool.

When initially establishing a connection pool link list, through statistically analyzing the history record of the WAP gateway establishing links to the external WAP websites, which network sites are visited frequently is obtained according to the access record, and a connection pool is established for the most frequently accessed websites, and the number of long connections in the connection pool is dynamically adjusted according to the frequency of access.

On the overall architecture of the technical solution of HTTP communication supporting the long connection, on the one hand, considering that the WAP gateway uses a single thread to manage the connection pools of hundreds of domain names at any time, the efficiency is not high, and multiple threads should be used to operate the connection pools. On the other hand, considering that there is mutual exclusion when modifying the global structure variables in the connection pool and using the mutual exclusion lock causes the problem of low efficiency, the HASH algorithm is used to divide the connection pools into multiple portions whose number is the same as the number of threads, and the multiple portions of the connection pools are managed respectively by each thread.

For the management of connection pool, how to divide the connection pools is a key issue, and if only the domain name or the IP address is used to classify different long connections, only different websites can be distinguished, but different services of one website cannot be completely distinguished, and generally the same website uses different ports to provide different services. For example, a certain website provides domestic and international news through the port 80 of the website, and the port 8080 can be used to provide product information, and if providing the access only according to the domain name or the IP address, it cannot distinguish two services, it is possible that a user who is originally going to read the news gets the product information. Therefore, if only the domain name or the IP address is used to distinguish different long connections, it might cause confusion to the accessed service. Thus a combination of the domain name and the port determines a unique WAP service, therefore the connection pool is stored in the HASH table by taking the [Domain Name/IP address: port] as the keyword. Since it is unable to determine how many domain names have been accessed by one WAP gateway, said connection pool can only dynamically apply for the memory, whose number cannot be limited.

For some infrequently accessed websites, memory must be applied for to establish the connection pool in order to access them, and it is inevitable that the system will be filled with these unnecessary memories after a long time, and it is bound to clean up these unnecessary memories, and the best method for measuring whether a connection pool is necessary or not is the time, for example, the website a.com is not accessed in 240 seconds, then its connection pool and the corresponding long connections in the connection pool are released. That is, for the long connections corresponding to some occasional accessed IP address or domain name, if no HTTP messages are carried in a certain time period, its corresponding connection pool is automatically released.

In order to search out those unused connection pools, at each time, the connection pool needs to record the access time at each time and all the connection pools need to be visited to determine whether a connection pool is active in a time period or not, which results in a waste of efficiency. Therefore, the least recently used (LRU) algorithm can be used, if the connection pools are arranged in a queue, the accessed connection pool is placed in the head at each time, and what is in the end must be a connection pool that has not been accessed for a long time. If all connection pools under the single thread constitute a link list, at each time when a connection pool carries a HTTP message, the connection pool is moved to the head of the link list, and the end of the link list is certainly the connection pool that has not been accessed for a long time, therefore according to the time condition (such as the release time limit), traversing from the end of the list rather than traversing the whole list can find the connection pools that should be released.

After a connection pool is established, the long connections in the connection pool are used to provide the access from the WAP gateway to the website, and regarding to the connection pool identifying a certain website, the connection pool should have a number of long connections, and some long connections are busy and some long connections are idle. If it needs to establish a link to the website to provide the WAP access service, those idle long connections must be found, and if traversing all the long connections in the connection pool to find out the long connections in the idle state, the efficiency is certainly reduced. Therefore, the method of queuing can be used to respectively arrange the idle long connections and busy long connections in a link list: the idle long connection list and the busy long connection link list:
at each time when it needs to establish a link for the website corresponding to the connection pool, a long connection at the head of the idle long connection link list is allocated to the website to provide the link establishment service, and the allocated long connection for link establishment is added into the end of the busy long connection link list;
for the busy long connection link list, when one busy long connection fulfills the access to the website corresponding to the connection pool and carries the information returned by the website to fulfill a task, and that long connection is extracted from the busy long connection link list and added to the end of the idle long connection link list;
if the idle long connection link list is empty and all the long connections are allocated to the busy link list, one new long connection is established for the connection pool to provide link establishment service for the new access.

Therefore, in the present invention, all long connections established with the same WAP site are set in the connection pool of the long connection management apparatus, and two link lists are used to manage long connections in two states: idle and busy, thus to avoid the inevitable efficiency problem due to traversing all the long connections to find links in the idle state.

Since accessing the WAP site has service peaks and troughs, it needs to dynamically adjust the number of long connections in the connection pool, and it needs to ensure that the number of long connections in the connection pool is adjusted according to how busy accessing the WAP site of the domain name is, thus it is required to regularly record the number of busy links in the connection pool, calculate the statistical average value and maintain that the number of links is equal to or less than the average value, which can guarantee that the probability that there is long connection available is larger when accessing the website next time, and the readable and writable socket processing time can be reduced after each select. The test verifies that at a certain time point, the number of links is greater than the statistical average value, and in the next link adjustment, a portion of the links whose number is greater than the statistical average value will be all released. The condition of jitter is not only a few, and the variance needs to be calculated to determine the jitter degree and then the adjustment is performed. According to the Chebishev theorem, the statistical average value plus one time of the variance can increase the probability of accessing the WAP site each time without having to establish the link to at least 87.5%, thus it is worth using. Of course, increasing the multiplexing rate takes increasing the number of system links as a condition.

Based on the aforementioned analysis, it is concluded that the link resource management method for long connection communication can be obtained, comprising the following steps:
according to the history record of HTTP communication, taking the [Domain Name/IP address: port] as a keyword to establish a corresponding connection pool, adjusting the numbers of idle long connections and busy long connections in the connection pool dynamically according to the frequency of accessing the WAP website identified by the [Domain Name/IP address: port];
when it needs to establish a link between the WAP gateway and the WAP website, searching for the corresponding connection pool according to the [domain name/IP address: port] of the access request, if the corresponding connection pool is searched out, allocating an idle long connection to the access request in the connection pool, and using the allocated idle long connections to establish a link so as to perform the HTTP communication with the WAP website identified by the [Domain Name/IP address: port].

Said method further comprises: if the corresponding connection pool is not searched out according to the [domain/IP address: port] of the access request, establishing a new corresponding connection pool by taking the [domain name/IP address: port] as the keyword, and establishing a new idle long connection in the connection pool and allocating it to the access request for the link establishment.

When operating the connection pools, the multi-thread method can be used to operate the connection pools, and the HASH algorithm is used to divide the connection pools into multiple portions whose number is the same as the number of threads, and the portions of the connection pools are managed by each thread respectively.

One HASH table is used in a single thread to characterize the capacity of the connection pool, and the least recently used algorithm (LRU) is used in the HASH table to arrange the connection pools under a single thread into a link list, at each time when there is a HTTP access request, the accessed connection pool which is searched out according to the [Domain Name/ IP address: port] is set in the head of the connection pool link list.

The connection pools that do not carry any HTTP messages within a certain time period are released regularly, and the connection pool queue is traversed from end to head of the connection pool link list according to the release time limit, and the connection pools that exceed the release time limit and do not carry any HTTP messages are released.

The HASH table is used in one connection pool to characterize the number of long connections in the connection pool, and the number of busy links in the connection pool is regularly recorded and a statistical average value is calculated to obtain the number of long connections.

Said connection pools comprise: an idle long connection link list and a busy long connection link list, wherein:
at each time when it needs to establish a link for the WAP website, which is identified by the [domain name/IP address: port], corresponding to the connection pool, the idle long connection in the head of the idle long connection queue is allocated to provide the link establishment service, and the long connection allocated to establish the link is added into the end of the busy long connection link list;
when a busy long connection fulfills the access to the WAP website corresponding to the connection pool and carries the information returned by the WAP website to fulfill a task, that long connection is extracted from the busy long connection link list and is added to the end of idle long connection link list;
when the idle long connection link list is empty, a new idle long connection is established for the connection pool.

In practical applications, for the WAP gateway service, the time for releasing the inactive connection pools (that is, the release time limit) is set to be 120s or more, and the average and variance of the number of long connections can be sampled per second, and it is one minute for sampling 60 cycles. The number of long connections in each connection pool is kept within the Average (the statistical mean value) + Squater (variance) * ChvbshevPara (the Chebyshev coefficient). If the node link resources are scarce, the Chebyshev coefficient can be set as zero, and if it needs to increase the multiplexing rate, the coefficient can be set as a larger value, the testing result shows that when the coefficient is set to be greater than or equal to 3, the long connections can no longer be released. The value of that coefficient can be determined based on the use of the node link resources.

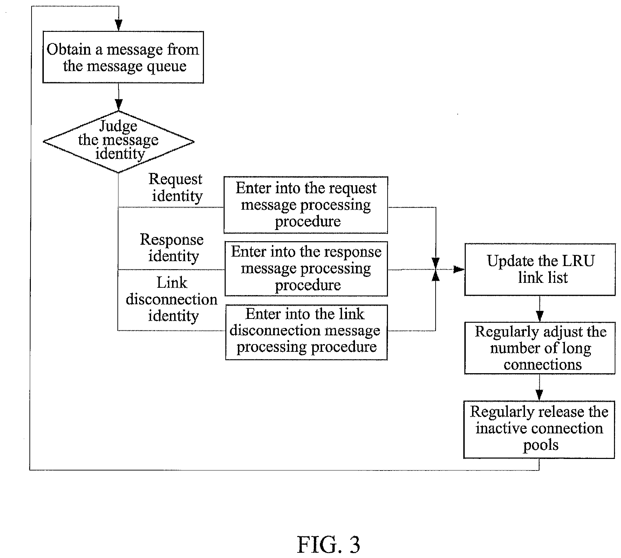

As shown in FIG. 3, it shows the total process of using the present invention to perform the HTTP message communication, and the long connection management apparatus obtains messages from the message queue to judge the category of the message identity:
if it is a request identity, the request message processing procedure is entered into, and the LRU link list characterizing the long connection pools is updated after the processing has been completed;
if it is a response identity, the response message processing procedure is entered into, and the LRU link list characterizing the long connection pools is updated after the processing has been completed;
if it is a link disconnection identity, the link disconnection message processing procedure is entered into, and the LRU link list characterizing the long connection pools is updated after the processing has been completed.

Said LRU link list characterizes the connection pool, after the LRU link list is updated, the number of long connections in the long connection pool is adjusted periodically, and the inactive connection pools are periodically released, and messages are continued to be obtained from the message queue.

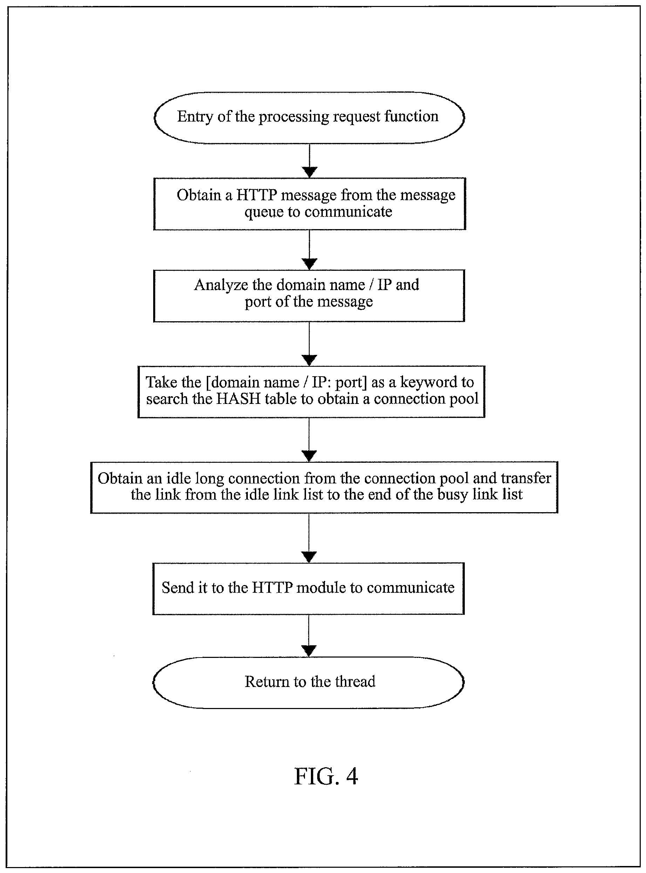

As shown in FIG. 4, when the long connection management apparatus receives a HTTP access request from the message queue, if the corresponding message identity is a request identity, the entry of the processing request function is firstly called, and the HTTP request is obtained from the message queue, and the message domain name/IP and port are analyzed, and the [Domain Name/IP address: port] is taken as a keyword to search the HASH table to obtain the connection pool, and an idle long connection is obtained from the connection pool and the link is transferred from the idle long connection link list to the end of the busy long connection link list, and it is sent to the HTTP module for communication, returning to the thread.

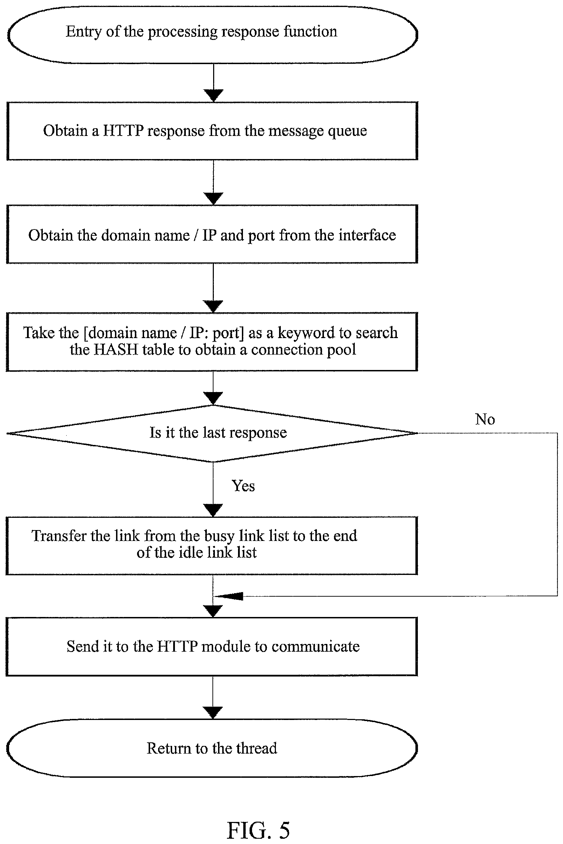

As shown in FIG. 5, when receiving a HTTP access request from the message queue, if the corresponding message identity is a response identity, the entry of the processing response function is called, after obtaining the HTTP response from the message queue, the domain name/IP and port are obtained from the interface, and the [Domain Name/IP address: port] is taken as a keyword to search the HASH table to obtain the connection pool, and it is judged whether it is the last response or not? If yes, the link is transferred from the busy long connection link list to the end of the idle long connection link list, and thereafter it is sent to the HTTP module to communicate, if no, it is directly sent to the HTTP module to communicate, returning to the thread.

The above description is only the embodiments of the present invention and is not intended to limit the present invention, and for people skilled in the art, the present invention can have a variety of changes and modifications. Without departing from the scope of the appended claims, any changes, equivalent replacements and improvements and so on should be included within the scope of the claims in the present invention.

### Industrial applicability

The technical solution of the present invention solves the problems of link establishment delay and resource waste due to the frequent link establishment in the HTTP short connection communication, and it achieves the TCP long connection communication and can adjust the number of long connections in real time: at the same time when guaranteeing the normal HTTP message communication, the number of connections established and closed per unit time can be reduced, thereby reducing the pressure on the firewall, so that the HTTP communication efficiency in the direction of link establishment from the WAP gateway to the WAP website is significantly increased. Through the test, it can be found that more frequent accessing a website with a certain domain name, the multiplexing effect would be better, and the quasi-WAP site test constructed by the WAP bill indicates that the multiplexing efficiency can reach about 90%.

## Claims

1. A link resource management method for long connection communication, comprising the following steps performed by a long connection management apparatus:
according to a history record of HTTP communication, taking a [Domain Name/IP address: port] as a keyword to establish a connection pool, configuring a number of idle long connections and busy long connections in the connection pool according to frequency of accessing a WAP website identified by the [Domain Name/IP address: port];
when needing to establish a link between a WAP gateway and the WAP website, searching for a corresponding connection pool according to the [domain name/IP address:
port] of an access request, if the corresponding connection pool is searched out, allocating an idle long connection to the access request in the connection pool, and informing a HTTP module to establish a link by using the allocated idle long connection to perform a HTTP communication with the WAP website identified by the [Domain Name/IP address: port].

2. The method of claim 1, wherein, said method further comprises:
if the corresponding connection pool is not searched out according to the [domain name/ IP address: port] of the access request, establishing a new corresponding connection pool by taking the [domain name/IP address: port] as the keyword, and establishing a new idle long connection in the connection pool and allocating the new idle long connection to the access request for link establishment.

3. The method of claim 1, wherein, said method further comprises:
all connection pools using one HASH table in a single thread to characterize a capacity of the connection pool, using a least recently used algorithm, LRU, in the HASH table to arrange the connection pools in the single thread into a link list, at each time when there is a HTTP access request, an accessed connection pool which is searched out according to the [Domain Name/IP address: port] being set at the head of connection pool link list.

4. The method of claim 3, wherein, said method further comprises:
regularly releasing the connection pools that do not carry any HTTP messages within a certain time period in the connection pool link list, and traversing from end to head of the connection pool link list according to a release time limit, and releasing the connection pools that exceed the release time limit and do not carry any HTTP messages.

5. The method of claim 1, wherein, said method further comprises:
using a HASH table in one connection pool to characterize the number of long connections in the connection pool, and regularly recording the number of busy links in the connection pool and calculating a statistical average value to obtain the number of the long connections.

6. The method of claim 1, wherein, said connection pool comprises: an idle long connection link list and a busy long connection link list, and said method further comprises:
at each time when a link is required to be established for the WAP website, which is identified by the [domain name/IP address: port], corresponding to the connection pool, allocating an idle long connection at the head of the idle long connection link list to the WAP website to provide a link establishment service, and adding the allocated long connection for link establishment into the end of the busy long connection link list;
when one busy long connection fulfills an access to the WAP website corresponding to the connection pool, extracting that long connection from the busy long connection link list and adding that long connection to the end of the idle long connection link list;
when the idle long connection link list is empty, establishing a new idle long connection for the connection pool.

7. A long connection management apparatus, which is connected between a WAP gateway and a HTTP module, comprising: a resource management module and one or more connection pools,
each connection pool corresponds to one WAP website identified by [Domain Name/IP address: port]; said each connection pool comprises one or more long connections, wherein, idle long connections constitute an idle long connection link list, and busy long connections constitute a busy long connection link list;
said resource management module is configured to: when receiving a HTTP access request, search for a corresponding connection pool according to the [domain name/IP address: port] of the HTTP access request, if the corresponding connection pool is searched out, allocate an idle long connection to the HTTP access request in the connection pool, and inform the HTTP module of the allocated idle long connection.

8. The long connection management apparatus of claim 7, wherein,
said resource management module is further configured to: use one HASH table to characterize a capacity of the connection pool in a single thread, and use a least recently used algorithm, LRU, in the HASH table to arrange the connection pools in the single thread into a link list, and at each time when there is the HTTP access request, place an accessed connection pool which is searched out according to the [Domain Name/IP address: port] at the head of connection pool link list.

9. The long connection management apparatus of claim 8, wherein,
said resource management module is further configured to: regularly release the connection pools that do not carry any HTTP messages within a certain time period, traverse from end to head of the connection pool link list according to a release time limit, and release the connection pools that exceed the release time limit and do not carry any HTTP messages.

10. The long connection management apparatus of claim 7, wherein,
said connection pool uses a HASH table to characterize the number of long connections in the connection pool, and regularly records the number of busy links in the connection pool and calculates a statistical average value to obtain the number of the long connections.

11. The long connection management apparatus of claim 7, wherein, said connection pool comprises: an idle long connection link list and a busy long connection link list,
said resource management module is further configured to: at each time when a link is required to be established for the WAP website, which is identified by the [Domain Name/IP address: port], corresponding to the connection pool, allocate an idle long connection at the head of the idle long connection link list to the WAP website to provide a link establishment service, and add the allocated long connection for link establishment into the end of the busy long connection link list;
after one busy long connection completes an access to the WAP website corresponding to the connection pool, extract that long connection from the busy long connection link list and add that long connection to the end of the idle long connection link list;
when the idle long connection link list is empty, establish a new idle long connection for the connection pool.

## Patentansprüche

1. Verfahren zum Verwalten von Verknüpfungsressourcen für eine Kommunikation mit langen Verbindungen, welches die folgenden, von einer Vorrichtung zum Verwalten von langen Verbindungen ausgeführten Schritte umfasst, dass:
in Übereinstimmung mit einem Verlaufsprotokoll einer HTTP-Kommunikation ein [Domänenname/IP-Adresse: Anschluss] als Schlüsselwort verwendet wird, um einen Verbindungspool einzurichten, wobei eine Anzahl von leer laufenden langen Verbindungen und von tätigen langen Verbindungen in dem Verbindungspool in Übereinstimmung mit einer Zugriffsfrequenz auf eine WAP-Website, die durch den [Domänenname/IP-Adresse: Anschluss] identifiziert ist, konfiguriert wird;
wenn das Einrichten einer Verknüpfung zwischen einem WAP-Gateway und der WAP-Website benötigt wird, nach einem entsprechenden Verbindungspool in Übereinstimmung mit dem [Domänenname/IP-Adresse: Anschluss] einer Zugriffsanforderung gesucht wird, wenn der entsprechende Verbindungspool ausfindig gemacht wird, eine leer laufende lange Verbindung in dem Verbindungspool für die Zugriffsanforderung reserviert wird und ein HTTP-Modul informiert wird, um eine Verknüpfung unter Verwendung der reservierten leer laufenden langen Verbindung einzurichten, um eine HTTP-Kommunikation mit der WAP-Website auszuführen, die durch den [Domänenname/IP-Adresse: Anschluss] identifiziert ist.

2. Verfahren nach Anspruch 1, wobei das Verfahren ferner umfasst, dass:
wenn der entsprechende Verbindungspool in Übereinstimmung mit dem [Domänenname/IP-Adresse: Anschluss] der Zugriffsanforderung nicht ausfindig gemacht wird, ein neuer entsprechender Verbindungspool eingerichtet wird, indem der [Domänenname/IP-Adresse: Anschluss] als Schlüsselwort verwendet wird, und eine neue leer laufende lange Verbindung in dem Verbindungspool eingerichtet wird und die neue leer laufende lange Verbindung für die Zugriffsanforderung zum Einrichten einer Verknüpfung reserviert wird.

3. Verfahren nach Anspruch 1, wobei das Verfahren ferner umfasst, dass:
alle Verbindungspools eine HASH-Tabelle in einem einzelnen Thread verwenden, um eine Kapazität des Verbindungspools zu charakterisieren, wobei ein Algorithmus der letzten Verwendung, LRU-Algorithmus, in der HASH-Tabelle verwendet wird, um die Verbindungspools in dem einzelnen Thread in einer Verknüpfungsliste immer dann anzuordnen, wenn es eine HTTP-Zugriffsanforderung gibt, wobei ein Verbindungspool, auf den zugegriffen wird, der in Übereinstimmung mit dem [Domänenname/IP-Adresse: Anschluss] ausfindig gemacht wird, an den Anfang der Verbindungspoolverknüpfungsliste gesetzt wird.

4. Verfahren nach Anspruch 3, wobei das Verfahren ferner umfasst, dass:
die Verbindungspools in der Verbindungspoolverknüpfungsliste, die innerhalb einer bestimmten Zeitspanne keinerlei HTTP-Nachrichten befördern, regelmäßig freigegeben werden, und die Verbindungspoolverknüpfungsliste vom Ende zum Anfang in Übereinstimmung mit einer Freigabezeitgrenze durchlaufen wird und die Verbindungspools freigegeben werden, welche die Freigabezeitgrenze überschreiten und keinerlei HTTP-Nachrichten befördern.

5. Verfahren nach Anspruch 1, wobei das Verfahren ferner umfasst, dass:
eine HASH-Tabelle in einem Verbindungspool verwendet wird, um die Anzahl von langen Verbindungen in dem Verbindungspool zu charakterisieren, und regelmäßig die Anzahl von tätigen Verknüpfungen in dem Verbindungspool aufgezeichnet wird und ein statistischer Mittelwert berechnet wird, um die Anzahl der langen Verbindung zu erhalten.

6. Verfahren nach Anspruch 1, wobei der Verbindungspool umfasst: eine Verknüpfungsliste mit leer laufenden langen Verbindungen und eine Verknüpfungsliste mit tätigen langen Verbindungen und wobei das Verfahren ferner umfasst, dass:
zu jeden Zeitpunkt, an dem angefordert wird, dass eine Verknüpfung für die WAP-Website eingerichtet werden soll, welche durch den [Domänenname/IP-Adresse: Anschluss] identifiziert ist, entsprechend dem Verbindungspool eine leer laufende lange Verbindung am Anfang der Verknüpfungsliste mit leer laufenden langen Verbindungen für die WAP-Website reserviert wird, um einen Verknüpfungseinrichtungsdienst bereitzustellen, und die reservierte lange Verbindung zum Einrichten einer Verknüpfung zu dem Ende der Verknüpfungsliste mit tätigen langen Verbindungen hinzugefügt wird;
wenn eine tätige lange Verbindung einen Zugriff auf die WAP-Website entsprechend dem Verbindungspool erfüllt, diese lange Verbindung aus der Verknüpfungsliste mit tätigen langen Verbindungen extrahiert wird und diese lange Verbindung zu dem Ende der Verknüpfungsliste mit leer laufenden langen Verbindungen hinzugefügt wird;
wenn die Verknüpfungsliste mit leer laufenden langen Verbindungen leer ist, eine neue leer laufende lange Verbindung für den Verbindungspool eingerichtet wird.

7. Vorrichtung zum Verwalten von langen Verbindungen, welche zwischen einem WAP-Gateway und einem HTTP-Modul angeschlossen ist, umfassend: ein Ressourcenmanagementmodul und einen oder mehrere Verbindungspools,
wobei jeder Verbindungspool einer WAP-Website entspricht, die durch [Domänenname/IP-Adresse: Anschluss] identifiziert ist; wobei jeder der Verbindungspools eine oder mehrere lange Verbindungen umfasst, wobei leer laufende lange Verbindungen eine Verknüpfungsliste mit leer laufenden langen Verbindung bilden und tätige lange Verbindungen eine Verknüpfungsliste mit tätigen langen Verbindungen bilden;
wobei das Ressourcenmanagementmodul ausgestaltet ist, um: wenn es eine HTTP-Zugriffsanforderung empfängt, nach einem entsprechenden Verbindungspool in Übereinstimmung mit dem [Domänenname/IP-Adresse: Anschluss] der HTTP-Zugriffsanforderung zu suchen, wenn der entsprechende Verbindungspool ausfindig gemacht wird, eine leer laufende lange Verbindung in dem Verbindungspool für die HTTP-Zugriffsanforderung zu reservieren und das HTTP-Modul über die reservierte leer laufende lange Verbindung zu informieren.

8. Vorrichtung zum Verwalten von langen Verbindungen nach Anspruch 7, wobei
das Ressourcenmanagementmodul ferner ausgestaltet ist, um: eine HASH-Tabelle in einem einzelnen Thread zu verwenden, um eine Kapazität des Verbindungspools zu charakterisieren, und um einen Algorithmus der letzten Verwendung, LRU-Algorithmus, in der HASH-Tabelle zu verwenden, um die Verbindungspools in dem einzelnen Thread in einer Verknüpfungsliste anzuordnen, und um jedes Mal, wenn es eine HTTP-Zugriffsanforderung gibt, einen Verbindungspool, auf den zugegriffen wird und der in Übereinstimmung mit dem [Domänenname/IP-Adresse: Anschluss] ausfindig gemacht wurde, an den Anfang der Verbindungspoolverknüpfungsliste zu platzieren.

9. Vorrichtung zum Verwalten von langen Verbindungen nach Anspruch 8, wobei
das Ressourcenmanagementmodul ferner ausgestaltet ist, um: die Verbindungspools regelmäßig freizugeben, die innerhalb einer bestimmten Zeitspanne keinerlei HTTP-Nachrichten befördern, in Übereinstimmung mit einer Freigabezeitgrenze die Verbindungspoolverknüpfungsliste vom Ende bis zum Anfang zu durchqueren, und um die Verbindungspools freizugeben, welche die Freigabezeitgrenze überschreiten und keinerlei HTTP-Nachrichten befördern.

10. Vorrichtung zum Verwalten von langen Verbindungen nach Anspruch 7, wobei
der Verbindungspool eine HASH-Tabelle verwendet, um die Anzahl von langen Verbindungen in dem Verbindungspool zu charakterisieren, und die Anzahl der tätigen Verknüpfungen in dem Verbindungspool regelmäßig aufzeichnet und einen statischen Mittelwert berechnet, um die Anzahl der langen Verbindungen zu erhalten.

11. Vorrichtung zum Verwalten von langen Verbindungen nach Anspruch 7, wobei der Verbindungspool umfasst: eine Verknüpfungsliste mit leer laufenden langen Verbindungen und eine Verknüpfungsliste mit tätigen langen Verbindungen,
wobei das Ressourcenmanagementmodul ferner ausgestaltet ist, um: jedes Mal, wenn die Einrichtung einer Verknüpfung für die WAP-Website angefordert wird, welche durch den [Domänenname/IP-Adresse: Anschluss] identifiziert ist, entsprechend dem Verbindungspool eine leer laufende lange Verbindung am Anfang der Verknüpfungsliste mit leer laufenden langen Verbindungen für die WAP-Website zu reservieren, um einen Verknüpfungseinrichtungsdienst bereitzustellen, und um die reservierte lange Verbindung zum Einrichten einer Verknüpfung an das Ende der Verknüpfungsliste mit tätigen langen Verbindungen anzufügen;
nachdem eine tätige lange Verbindung einen Zugriff auf die WAP-Website entsprechend dem Verbindungspool abgeschlossen hat, diese lange Verbindung aus der Verknüpfungsliste mit tätigen langen Verbindungen zu extrahieren und diese lange Verbindung an das Ende der Verknüpfungsliste mit leer laufenden langen Verbindungen anzufügen;
wenn die Verknüpfungsliste mit leer laufenden langen Verbindungen leer ist, eine neue leer laufende lange Verbindung für den Verbindungspool einzurichten.

## Revendications

1. Procédé de gestion de ressources de liaison pour une communication à longues connexions, comprenant les étapes ci-dessous, mises en oeµvre par un appareil de gestion de longues connexions :
selon un enregistrement d'historique de communication HTTP, utiliser un identifiant [Nom de domaine / Adresse IP : port] en tant que mot clé en vue d'établir un groupe de connexions, et configurer un nombre de longues connexions inactives et de longues connexions occupées dans le groupe de connexions selon une fréquence d'accès à un site web WAP identifié par l'identifiant [Nom de domaine / Adresse IP : port] ;
lorsqu'il est nécessaire d'établir une liaison entre une passerelle de protocole WAP et le site web WAP, rechercher un groupe de connexions correspondant selon l'identifiant [Nom de domaine / Adresse IP : port] d'une demande d'accès, si le groupe de connexions correspondant est détecté, affecter une longue connexion inactive à la demande d'accès dans le groupe de connexions, et signaler à un module HTTP d'établir une liaison en utilisant la longue connexion inactive affectée, en vue de mettre en oeuvre une communication HTTP avec le site web WAP identifié par l'identifiant [Nom de domaine / Adresse IP : port].

2. Procédé selon la revendication 1, dans lequel, ledit procédé comporte en outre les étapes ci-dessous consistant à :
si le groupe de connexions correspondant n'est pas détecté selon l'identifiant [Nom de domaine / Adresse IP : port] de la demande d'accès, établir un nouveau groupe de connexions correspondant en utilisant l'identifiant [Nom de domaine / Adresse IP : port] en tant que mot clé, établir une nouvelle longue connexion inactive dans le groupe de connexions et affecter la nouvelle longue connexion inactive à la demande d'accès à des fins d'établissement de liaison.

3. Procédé selon la revendication 1, dans lequel, ledit procédé comporte en outre l'étape ci-dessous dans laquelle :
tous les groupes de connexions utilisent une table de hachage « HASH » dans un fil unique en vue de caractériser une capacité du groupe de connexions, et ils utilisent un algorithme d'ancienneté, LRU, dans la table de hachage « HASH » en vue d'agencer les groupes de connexions dans le fil unique au sein d'une liste de liaisons, et dès lors qu'il existe une demande d'accès de protocole HTTP, un groupe de connexions accessible est détecté selon l'identifiant [Nom de domaine / Adresse IP : port] défini au début de la liste de liaisons de groupes de connexions.

4. Procédé selon la revendication 3, dans lequel, ledit procédé comporte en outre les étapes ci-dessous consistant à :
libérer régulièrement les groupes de connexions qui ne transportent pas de messages de protocole HTTP quelconques au cours d'une période de temps donnée dans la liste de liaisons de groupes de connexions, parcourir, de la fin au début, la liste de liaisons de groupes de connexions selon une limite temporelle de libération, et libérer les groupes de connexions qui dépassent la limite temporelle de libération et ne transportent pas de messages de protocole HTTP quelconques.

5. Procédé selon la revendication 1, dans lequel, ledit procédé comporte en outre les étapes ci-dessous consistant à :
utiliser une table de hachage « HASH » dans un groupe de connexions en vue de caractériser le nombre de longues connexions dans le groupe de connexions, enregistrer régulièrement le nombre de liaisons occupées dans le groupe de connexions et calculer une valeur moyenne statistique en vue d'obtenir le nombre des longues connexions.

6. Procédé selon la revendication 1, dans lequel, ledit groupe de connexions comporte : une liste de liaisons de longues connexions inactives et une liste de liaisons de longues connexions occupées, et ledit procédé comporte en outre les étapes ci-dessous consistant à :
dès lors qu'une liaison est requise afin d'être établie pour le site web WAP, qui est identifié par l'identifiant [Nom de domaine / Adresse IP : port] correspondant au groupe de connexions, affecter une longue connexion inactive au début de la liste de liaisons de longues connexions inactives au site web WAP en vue de fournir un service d'établissement de liaison, et ajouter la longue connexion affectée pour l'établissement de liaison à la fin de la liste de liaisons de longues connexions occupées ;
lorsqu'une longue connexion occupée achève un accès au site web WAP correspondant au groupe de connexions, extraire cette longue connexion de la liste de liaisons de longues connexions occupées et ajouter cette longue connexion à la fin de la liste de liaisons de longues connexions inactives ;
lorsque la liste de liaisons de longues connexions inactives est vide, établir une nouvelle longue connexion inactive pour le groupe de connexions.

7. Appareil de gestion de longues connexions, lequel est connecté entre une passerelle de protocole WAP et un module HTTP, comprenant : un module de gestion de ressources et un ou plusieurs groupes de connexions ;
dans lequel chaque groupe de connexions correspond à un site web WAP identifié par un identifiant [Nom de domaine / Adresse IP : port] ; ledit chaque groupe de connexions comporte une ou plusieurs longues connexions, dans lequel, des longues connexions inactives constituent une liste de liaisons de longues connexions inactives, et des longues connexions occupées constituent une liste de liaisons de longues connexions occupées ;
ledit module de gestion de ressources est configuré de manière à : lors de la réception d'une demande d'accès de protocole HTTP, rechercher un groupe de connexions correspondant selon l'identifiant [Nom de domaine / Adresse IP : port] de la demande d'accès de protocole HTTP, et si le groupe de connexions correspondant est détecté, affecter une longue connexion inactive à la demande d'accès de protocole HTTP dans le groupe de connexions, et signaler au module HTTP la longue connexion inactive affectée.

8. Appareil de gestion de longues connexions selon la revendication 7, dans lequel,
ledit module de gestion de ressources est en outre configuré de manière à : utiliser une table de hachage « HASH » en vue de caractériser une capacité du groupe de connexions dans un fil unique, et utiliser un algorithme d'ancienneté, LRU, dans la table de hachage « HASH » en vue d'agencer les groupes de connexions dans le fil unique au sein d'une liste de liaisons, et dès lors qu'il existe une demande d'accès de protocole HTTP, placer un groupe de connexions accessible qui est détecté selon l'identifiant [Nom de domaine / Adresse IP : port] au début de la liste de liaisons de groupes de connexions.

9. Appareil de gestion de longues connexions selon la revendication 8, dans lequel,
ledit module de gestion de ressources est en outre configuré de manière à : libérer régulièrement les groupes de connexions qui ne transportent pas de messages de protocole HTTP quelconques au cours d'une période de temps donnée, parcourir, de la fin au début, la liste de liaisons de groupes de connexions selon une limite temporelle de libération, et libérer les groupes de connexions qui dépassent la limite temporelle de libération et ne transportent pas de messages de protocole HTTP quelconques.

10. Appareil de gestion de longues connexions selon la revendication 7, dans lequel,
ledit groupe de connexions utilise une table de hachage « HASH » en vue de caractériser le nombre de longues connexions dans le groupe de connexions, il enregistre régulièrement le nombre de liaisons occupées dans le groupe de connexions, et il calcule une valeur moyenne statistique en vue d'obtenir le nombre des longues connexions.

11. Appareil de gestion de longues connexions selon la revendication 7, dans lequel, ledit groupe de connexions comporte : une liste de liaisons de longues connexions inactives et une liste de liaisons de longues connexions occupées ;
ledit module de gestion de ressources est en outre configuré de manière à : dès lors qu'une liaison est requise afin d'être établie pour le site web WAP, lequel est identifié par l'identifiant [Nom de domaine / Adresse IP : port] correspondant au groupe de connexions, affecter une longue connexion inactive au début de la liste de liaisons de longues connexions inactives au site web WAP en vue de fournir un service d'établissement de liaison, et ajouter la longue connexion affectée pour l'établissement de liaison à la fin de la liste de liaisons de longues connexions occupées ;
dès lors qu'une longue connexion occupée achève un accès au site web WAP correspondant au groupe de connexions, extraire cette longue connexion de la liste de liaisons de longues connexions occupées et ajouter cette longue connexion à la fin de la liste de liaisons de longues connexions inactives ;
lorsque la liste de liaisons de longues connexions inactives est vide, établir une nouvelle longue connexion inactive pour le groupe de connexions.
